# EUROPÄISCHE PATENTANMELDUNG

(11) **EP 2 045 484 A2**
(43) Veröffentlichungstag der Anmeldung: **08.04.2009**
(21) Anmeldenummer: 08163365.3
(22) Anmeldetag: 01.09.2008
(51) Int. Cl.: F16F 9/348

(54) **Dämpfventil**

(30) Priorität: 04.10.2007 DE 102007047516
(71) Anmelder: ZF Friedrichshafen AG, 88038 Friedrichshafen (DE)
(72) Erfinder: Berger, Stefan, 97078, Würzburg (DE)

(57) **Zusammenfassung**

Dämpfventil (3), umfassend einen Ventilkörper (7) mit mindestens einem Durchlasskanal (15), dessen Ausgangsöffnung von mindestens einer ersten mittels Federkraft auf einer Ventilsitzfläche (21) des Ventilkörpers vorgespannten Ventilscheibe (17) zumindest teilverschlossen ist, wobei die erste Ventilscheibe die Dämpfkraft für einen ersten Druckbereich im Durchlasskanal bestimmt, mit einem Zwischenring (29), der von mindestens einer Ventilfeder (31) in Richtung der ersten Ventilscheibe vorgespannt ist, die zumindest ab einem definierten Abhubweg mit dem Zwischenring und der Ventilfeder zusammenwirkt, und das Dämpfventil für den Zwischenring einen Axialanschlag (25) aufweist, der die Ventilstellung des Zwischenrings zumindest bei vollständiger Anlage der ersten Ventilscheibe auf der Ventilsitzfläche bestimmt, wobei sich die Federkraft für die erste Ventilscheibe unabhängig vom Zwischenring an einer separaten Fläche abstützt.

## Beschreibung

Die Erfindung betrifft ein Dämpfventil für einen Schwingungsdämpfer gemäß dem Oberbegriff von Patentanspruch 1.

Aus der DE 100 29 114 A1 ist ein Dämpfventil bekannt, das zwei Ventilstufen umfasst. Eine erste Ventilstufe wird von mindestens einer Ventilscheibe gebildet, die auf eine Ventilsitzfläche eines Ventilkörpers vorgespannt wird. Die mindestens eine Ventilscheibe stützt sich einerseits auf der Ventilsitzfläche und zumindest mittelbar an einem Zwischenring, in diesem Fall einem Zugstufenhalter, ab, der von einer Ventilfeder in Richtung des Ventilkörpers vorgespannt wird.

Bei einer kleinen Kolbenstangengeschwindigkeit hebt nur die mindestens eine Ventilscheibe von der Ventilsitzfläche ab. Als Gegenkraft zur hydraulischen Abhubkraft wirkt die Ventilfeder des Zwischenrings. Daraus resultiert eine gewisse Abhängigkeit der Dämpfkraftkennlinien beider Ventilstufen.

Die DE 10 2005 008 162 B3 offenbart ein mehrstufiges Dämpfventil, bei dem mindestens eine elastische zwischen einer Ventilsitzfläche eines Ventilkörpers und einer Ventilsitzfläche an einem Zwischenring verspannt ist. Der Zwischenring wird wiederum von einer Ventilfeder gegen den Ventilkörper gespannt. Auch bei dieser Lösung liegt eine gewisse Abhängigkeit der Dämpfkräfte zwischen den beiden Ventilstufen vor, da die Ventilfeder die Dämpfkräfte der ersten Ventilstufe abstützen muss und die Dämpfkräfte der zweiten Stufe ebenfalls bestimmt.

Aufgabe der vorliegenden Erfindung besteht darin, ein Dämpfventil zu realisieren, bei dem die Dämpfkräfte der beiden Ventilstufen variabler ausgeführt werden können.

Erfindungsgemäß wird die Aufgabe dadurch gelöst, dass das Dämpfventil für den Zwischenring einen Axialanschlag aufweist, der die Ventilstellung des Zwischenrings zumindest bei vollständiger Anlage der ersten Ventilscheibe auf der Ventilsitzfläche bestimmt, wobei sich die Federkraft für die erste Ventilscheibe unabhängig vom Zwischenring an einer separaten Fläche abstützt.

Der große Vorteil der Erfindung besteht darin, dass die Abhubkraft für die Ventilscheibe unabhängig von einer zweiten Dämpfventilstufe dimensioniert werden kann.

In weiterer vorteilhafter Ausgestaltung der Erfindung kommt die mindestens eine erste Ventilscheibe ab einem definierten Abhubweg zumindest mittelbar auf dem Zwischenring zur Anlage kommt. In der Ausgangstellung der mindestens einen Ventilscheibe und dem Zwischenring liegt ein axialer Abstand zwischen den beiden Teilen vor, wobei der Abstand den Kennlinienverlauf zwischen den beiden Ventilstufen maßgeblich beeinflusst.

Um einen insgesamt einen Dämpfventilaufbau und eine große Variabilität zu erhalten, wird der Anschlag von einem Anschlagring gebildet wird.

Im Hinblick auf eine kompakte einfache Bauweise des Dämpfventils stützt sich an einer ersten Deckseite des Anschlagrings der Zwischenring ab und an einer zweiten Deckseite ist die separate Stützfläche für die Federkraft für die mindestens eine Ventilscheibe ausgeführt.

Gemäß einem vorteilhaften Unteranspruch ist der Anschlagring als ein Winkelring ausgeführt. Eine besonders kurzbauende Ausgestaltung kann dadurch erzielt werden, indem der Zwischenring ein Topfprofil aufweist.

Neben der Anschlagfunktion erfüllt der Winkelring noch eine weitere Funktion, indem sich der Zwischenring radial an dem Winkelring zentriert.

Der Anschlagring stützt sich über einen Distanzring axial am Ventilkörper ab. Die Bauhöhe des Distanzrings bestimmt den Bauraum für die mindestens eine Ventilscheibe nebst Feder zur Erzeugung einer Federkraft in Richtung der Ventilsitzfläche.

Dabei zentriert sich die Ventilscheibe radial an dem Distanzring.

Anhand der folgenden Figurenbeschreibung soll die Erfindung näher erläutert werden.

Es zeigt:
- Fig. 1: Dämpfventil in der Ausgangsstellung
- Fig. 2: Dämpfventil bei wirksamer erster Dämpfventilstufe
- Fig. 3: Dämpfventil bei wirksamer zweiter Dämpfventilstufe
- Fig. 4: Alternativausführung mit axial fest eingespannter Ventilscheibe

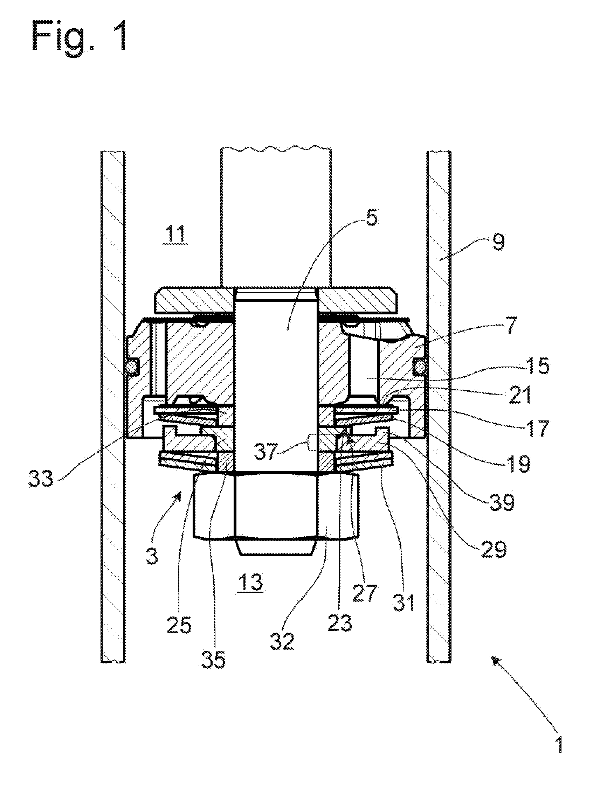

Die Fig. 1 zeigt einen Ausschnitt aus einem Schwingungsdämpfer 1 im Bereich eines Dämpfventils 3 in der Ausführung eines Kolbenventils an einer Kolbenstange 5, wobei sich die Erfindung nicht auf eine derartige Anordnung beschränkt, sondern beispielsweise auch als ein Bodenventil in einem beliebigen Schwingungsdämpfer zur Anwendung kommen kann.

Ein Ventilkörper 7 an der Kolbenstange 5 unterteilt einen mit einem beliebigen Dämpfmedium gefüllten Zylinder 9 in zwei Arbeitsräume 11; 13. In dem Ventilkörper 7 ist für mindestens eine Strömungsrichtung ein Durchlasskanal 15 ausgeführt, der an seiner Ausgangsöffnung von zumindest einer Ventilscheibe 17 zumindest teilweise verschlossen wird. Eine erste Feder 19 in der Bauform einer Tellerfeder spannt die Ventilscheibe 17 auf eine Ventilsitzfläche 21 des Ventilkörpers 7 vor. Die erste Feder 19 stützt sich im Bereich ihres Innendurchmessers auf einer ersten Deckseite 23 eines Anschlagrings 25 ab. Der Anschlagring 25 ist als ein Winkelring ausgeführt, dessen zweite Deckseite eine Stützfläche 27 einen Zwischenring 29 bildet. An einer der Ventilscheibe 17 abgewandten Seite des Zwischenrings 29 greift mindestens eine Ventilfeder 31 an. Eine Befestigungsmutter 32 verspannt den Ventilkörper 7 mit einem ersten Distanzring 33, dem Anschlagring 25 und einem zweiten Distanzring 35 an einem Absatz der Kolbenstange. Die erste Ventilscheibe 17 und die Feder 19 zentrieren sich an dem ersten Distanzring 33. Für die radiale Positionierung des Zwischenrings 29 dient der Anschlagring 25, dessen Hülsenteil 37 sich in Richtung der Befestigungsmutter 32 erstreckt. Der zweite Distanzring 35 zentriert die Ventilfeder 31.

Die Figur 1 zeigt das Dämpfventil in einer Ausgangsstellung, bei der die Ventilscheibe 17 auf der Ventilsitzfläche 21 vollständig zur Anlage kommt. Die Ventilscheibe 17 stützt sich unabhängig vom Zwischenring 29 an der zum Zwischenring separaten ersten Deckseite 23 des Anschlagrings 25 ab. Dabei besteht zwischen der Ventilscheibe 17 und dem Zwischenring 29, der ein Topfprofil aufweist, ein axialer Abstand, der unmaßstäblich groß dargestellt ist. Der Zwischenring liegt an der Stützfläche 27 des Anschlagrings 25 an. Ein umlaufender Rand 39 des Zwischenrings 29 weist in Richtung der Ventilscheibe 17.

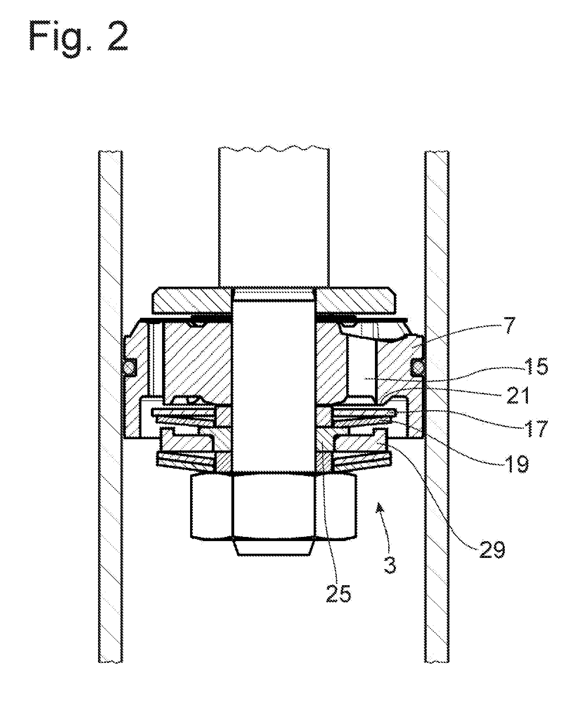

In der Fig. 2 hat sich die Ventilscheibe 17 aufgrund der Druckverhältnisse im Durchlasskanal 15 gegen die Kraft der Feder 19 etwas von der Ventilsitzfläche 21 des Ventilkörpers 7 abgehoben. Der Zwischenring 29 liegt dabei noch am Anschlagring 25 an, so dass die momentane Dämpfkraft in einer ersten Dämpfkraftstufe ausschließlich von der Schließkraft der Feder 19 bestimmt wird. Die Ventilfeder 31 ist aufgrund der Anschlagposition des Zwischenrings 29 nicht dämpfkraftbestimmend.

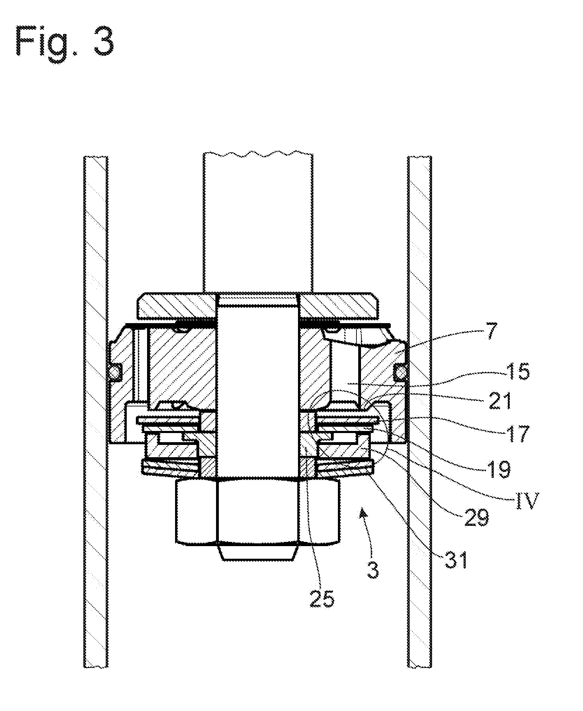

Mit der Fig. 3 soll ein Betriebszustand des Dämpfventils 3 dargestellt werden, bei dem die Ventilscheibe 17 ab einem definierten Abhubweg von der Ventilsitzfläche 21 auf dem Zwischenring 29 zur Anlage kommt und damit die Ventilfeder 31 zusammen mit der Feder 19 die Dämpfkraft bestimmt. Dabei spielt es für die Erfindung keine Rolle, ob sich die Ventilscheibe 17 direkt oder indirekt über die Feder 19 auf dem Zwischenring 29 abstützt. Der Zwischenring 29 ist von der Stützfläche 27 des Anschlagrings 25 abgehoben, so dass das Dämpfventil 3 eine zweite Dämpfkraftstufe einnimmt.

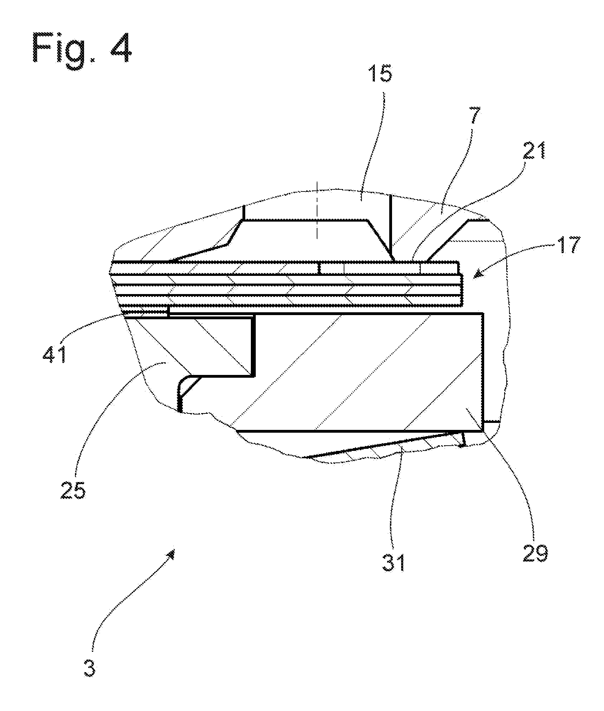

Die Fig. 4 zeigt einen vergrößerten Ausschnitt aus einer Variante des Dämpfventils 3, bei dem die Ventilscheibe 17 elastisch ausgeführt ist und mittels mindestens einer Abstandsscheibe 41 ein Abstand zwischen der Ventilscheibe 17 bzw. einem Ventilscheibenpaket und dem Zwischenring 29 eingestellt wird. Das Ventilscheibenpaket und die mindestens eine Abstandsscheibe sind axial zwischen dem Anschlag 25 und dem Ventilkörper 7 verspannt. Hinsichtlich der prinzipiellen Funktionsweise bestehen keine Unterschiede zu den Ausführungen nach den Fig. 1 bis 3.

## Patentansprüche

1. Dämpfventil (3), umfassend einen Ventilkörper (7) mit mindestens einem Durchlasskanal (15), dessen Ausgangsöffnung von mindestens einer mittels Federkraft auf einer Ventilsitzfläche (21) des Ventilkörpers (7) vorgespannten Ventilscheibe (17) zumindest teilverschlossen ist, wobei die Ventilscheibe (17) die Dämpfkraft für einen ersten Druckbereich im Durchlasskanal (15) bestimmt, mit einem Zwischenring, (29) der von mindestens einer Ventilfeder (31) in Richtung der Ventilscheibe (17) vorgespannt ist, die zumindest ab einem definierten Abhubweg mit dem Zwischenring (29) und der Ventilfeder (31) zusammenwirkt,
**dadurch gekennzeichnet,**
**dass** das Dämpfventil (3) für den Zwischenring (29) einen Axialanschlag (25) aufweist, der die Ventilstellung des Zwischenrings (29) zumindest bei vollständiger Anlage der Ventilscheibe(17) auf der Ventilsitzfläche (21) bestimmt, wobei sich die Federkraft für die Ventilscheibe (17) unabhängig vom Zwischenring (29) an einer separaten Fläche (23) abstützt.

2. Dämpfventil nach Anspruch 1,
**dadurch gekennzeichnet,**
**dass** die mindestens eine Ventilscheibe (17) ab einem definierten Abhubweg auf dem Zwischenring (29) zumindest mittelbar zur Anlage kommt.

3. Dämpfventil nach Anspruch 1,
**dadurch gekennzeichnet,**
**dass** der Anschlag von einem Anschlagring (25) gebildet wird.

4. Dämpfventil nach Anspruch 3,
**dadurch gekennzeichnet,**
**dass** sich an einer ersten Deckseite (27) des Anschlagrings (25) der Zwischenring (29) abstützt und an einer zweiten Deckseite die separate Stützfläche (23) für die Federkraft für mindestens eine Ventilscheibe (17) ausgeführt ist.

5. Dämpfventil nach Anspruch 1,
**dadurch gekennzeichnet,**
**dass** der Zwischenring (29) ein Topfprofil aufweist.

6. Dämpfventil nach Anspruch 3,
**dadurch gekennzeichnet,**
**dass** der Anschlagring als ein Winkelring (25) ausgeführt ist.

7. Dämpfventil nach Anspruch 6,
**dadurch gekennzeichnet,**
**dass** sich der Zwischenring (29) radial an dem Winkelring (25) zentriert.

8. Dämpfventil nach Anspruch 3,
**dadurch gekennzeichnet,**
**dass** sich der Anschlagring (25) über einen Distanzring (33) axial am Ventilkörper (7) abstützt.

9. Dämpfventil nach Anspruch 8,
**dadurch gekennzeichnet,**
**dass** sich die Ventilscheibe (17) radial an dem Distanzring (33) zentriert.
